# EUROPÄISCHE PATENTANMELDUNG

(11) **EP 1 124 208 A2**
(43) Veröffentlichungstag der Anmeldung: **16.08.2001**
(21) Anmeldenummer: 01250030.2
(22) Anmeldetag: 29.01.2001
(51) Int. Cl.: G07F 19/00, G06F 17/60

(54) **Verfahren zum Uebertragen von Zahlungsinformationen**

(30) Priorität: 28.01.2000 DE 10004730
(71) Anmelder: SIEMENS AKTIENGESELLSCHAFT, 80333 München (DE)
(72) Erfinder: Kastelewicz, Georg, 10179 Berlin (DE); Simeonov, Plamen, 10117 Berlin (DE)

(57) **Zusammenfassung**

Die Erfindung betrifft ein Verfahren zum Übertragen von für die Bezahlung von Produkten und Leistungen vorgesehenen Zahlungsinformationen eines sein Kommunikationsgerät (KG) bedienenden Zahlungswilligen an eine mit dem Kommunikationsgerät (KG) verbundene Kommunikationseinrichtung (KE) eines Informationsempfängers nach Feststellung der Identität des Zahlungswilligen durch das das Kommunikationsgerät (KG) enthaltende Kommunikationssystem (K).

Um die Zahlungsinformationen sicher und bequem zu übertragen, werden aus in einem an das Kommunikationssystem (K) angeschlossenen Datenspeicher gespeicherten Zahlungsdaten unter Nutzung der ermittelten Identität des Zahlungswilligen die diesem Zahlungswilligen zugeordneten Zahlungsinformationen kommunikationssystemseitig ausgewählt und an die Kommunikationseinrichtung (KE) des Informationsempfängers übermittelt.

## Beschreibung

Die Erfindung betrifft ein Verfahren zum Übertragen von für die Bezahlung von Produkten und Leistungen vorgesehenen Zahlungsinformationen eines sein Kommunikationsgerät bedienenden Zahlungswilligen an eine mit dem Kommunikationsgerät verbundene Kommunikationseinrichtung eines Informationsempfängers nach Feststellung der Identität des Zahlungswilligen durch das das Kommunikationsgerät enthaltende Kommunikationssystem.

Ein solches Verfahren ist z. B. aus dem Bereich des Versandhandels bekannt und beispielsweise in der Druckschrift "Der Katalog Herbst/Winter 1999/2000" der Deutschen Telekom AG K-Nr. 641430002, 2. Aufl. Stand Okt. 1999 auf Seite 249 insbesondere unter dem Punkt "Zahlung per Kreditkarte" beschrieben. Hierbei wird von einem Kommunikationsgerät (z.B. Telefon) des Zahlungswilligen (Kunde) der Informationsempfänger (Versandabteilung der Deutschen Telekom AG) angerufen und Zahlungsinformationen des Zahlungswilligen (hier seine Kreditkartendaten) übertragen. Dabei wird die Identität des Zahlungswilligen bzw. seines Telefonanschlusses zur Vergebührung des Telefonanrufs durch das Kommunikationssystem, hier das Telefonnetz, festgestellt.

Diese Übertragung der Zahlungsinformationen vom Zahlungswilligen zum Informationsempfänger birgt ein Risiko in sich, da die Zahlungsinformationen während der Übertragung durch Unbefugte abgehört und zur mißbräuchlichen Belastung der Kreditkarte verwendet werden können. Daher bestehen bei Zahlungswilligen oftmals Vorbehalte gegenüber der Übertragung von Kreditkartendaten über ein Kommunikationssystem an den Informationsempfänger. Darüber hinaus ist diese Übertragung unbequem für den Zahlungswilligen, da dieser bei jeder Anwendung des Verfahrens seine Zahlungsinformationen aufs Neue bereitstellen muss.

Es sind zwar Verfahren zum sicheren Übertragen von Informationen über Kommunikationssysteme bekannt, beispielsweise können die Informationen beim Zahlungswilligen codiert, danach codiert durch das Kommunikationssystem übertragen und beim Informationsempfänger wieder decodiert werden, jedoch setzt dies voraus, dass bei jedem Zahlungswilligen Einrichtungen zum Codieren vorhanden sind; bei einer großen Anzahl von Zahlungswilligen (z. B. beim Versandhandel) ist dieses Verfahren daher sehr aufwendig.

Der Erfindung liegt die Aufgabe zugrunde, ein Verfahren zum bequemen und sicheren Übertragen von Zahlungsinformationen an den Informationempfänger durch Kommunikationssysteme anzugeben.

Diese Aufgabe wird bei einem Verfahren der eingangs angegebenen Art erfindungsgemäß dadurch gelöst, dass
- dem Zahlungswilligen nach Feststellung seiner Identität kommunikationssystemseitig ein ihn kennzeichnender Datensatz zugeordnet wird,
- danach dieser Datensatz von dem Kommunikationssystem an die Kommunikationseinrichtung des Informationsempfängers übertragen wird,
- zwischen dem Kommunikationsgerät des Zahlungswilligen und der Kommunikationseinrichtung des Informationsempfängers eine Kommunikationsverbindung aufgebaut wird,
- von der Kommunikationseinrichtung des Informationsempfängers der den Zahlungswilligen kennzeichnende Datensatz an das Kommunikationssystem zurückgesandt wird und
- aus in einem an das Kommunikationssystem angeschlossenen Datenspeicher gespeicherten Zahlungsdaten unter Nutzung des zurückgesandten Datensatzes die dem Zahlungswilligen zugeordneten Zahlungsinformationen kommunikationssystemseitig ausgewählt und an die Kommunikationseinrichtung des Informationsempfängers übermittelt werden.

Das erfindungsgemäße Verfahren hat insbesondere den Vorteil, dass von einem Zahlungswilligen die Zahlungsinformationen nicht mehr bei jedem Übertragungsvorgang bereitgestellt werden müssen. Vielmehr sind diese Zahlungsinformationen unter den Zahlungsdaten in dem Datenspeicher enthalten und werden nach Feststellung der Identität des Zahlungswilligen vom Kommunikationssystem zum Informationsempfänger übertragen. Diese Übertragung kann nun in einfacher Art und Weise gesichert werden (z. B. durch Codierung/Decodierung). In diesem Fall sind Einrichtungen zum Codieren und Decodieren der Zahlungsinformationen nur kommunikationssystemseitig und beim Informationsempfänger notwendig, nicht jedoch bei allen Zahlungswilligen.

Darüberhinaus ist als besonders vorteilhaft anzusehen, dass der Informationsempfänger (z.B. ein Händler) aus dem den Zahlungswilligen kennzeichnenden Datensatz nicht die Identität des Zahlungswilligen erkennen kann. Die für den Informationsempfänger wichtigen Zahlungsinformationen (z.B. Kreditkartennummer und Kreditkartenablaufdatum) werden dem Informationsempfänger erst dann übermittelt, nachdem eine Kommunikationsverbindung zwischen dem Zahlungswilligen und dem Informationsempfänger aufgebaut wurde. Über die Kommunikationsverbindung können beispielsweise Informationen über zu liefernde Produkte und Leistungen und die Höhe der dafür zu leistenden Zahlungen übertragen werden und somit z.B. eine Einigung zwischen Zahlungswilligem und Informationsempfänger bezüglich eines Kaufes erreicht werden. Erst nachdem von der Kommunikationseinrichtung des Informationsempfängers der den Zahlungswilligen kennzeichnende Datensatz an das Kommunikationssystem zurückgesandt wurde, werden der Kommunikationseinrichtung des Informationsempfängers die für den Informationsempfänger nun notwendigen Zahlungsinformationen übermittelt.

In einer speziellen Ausführungsform des erfindungsgemäßen Verfahrens kann die Auswahl und die Übermittlung der Zahlungsinformationen von einem intelligenten Knoten eines mit dem Kommunikationssystem verbundenen oder in dem Kommunikationssystem enthaltenen Intelligenten Netzes gesteuert werden. Diese Ausführungsform hat insbesondere den Vorteil, dass die Zahlungsinformationen unter den Zahlungsdaten zentral in dem intelligenten Knoten gespeichert werden können und somit die Pflege und Aktualisierung der Zahlungsinformationen in kostengünstiger und einfacher Weise an dieser zentralen Stelle möglich ist.

In einer weiteren Auführungsform des erfindungsgemäßen Verfahrens kann vor der Übermittlung der Zahlungsinformationen an den Informationsempfänger kommunikationssystemseitig an das Kommunikationsgerät des Zahlungswilligen ein Abfragesignal gesendet werden. Durch dieses Abfragesignal kann der Zahlungswillige vor der Übermittlung seiner Zahlungsinformationen über die bevorstehende Übermittlung informiert und sein Einverständnis zur Übermittlung abgefragt werden.

In einer speziellen Ausführungsform des erfindungsgemäßen Verfahrens kann als Kommunikationssystem ein leitungsgebundenes Telefonnetz verwendet werden. In einer anderen speziellen Ausführungsform kann als Kommunikationssystem ein Mobiltelefonnetz und in einer weiteren speziellen Ausführungsform kann als Kommunikationssystem ein Rechnernetz verwendet werden. Diese Ausführungsformen ermöglichen es den Zahlungswilligen, mit dem Informationsempfänger sowohl über ein leitungsgebundenes Telefon, über ein Mobiltelefon oder über ein Rechnernetz (z. B. das Internet) in Kontakt zu treten.

Beim erfindungsgemäßen Verfahren kann die Identität des Zahlungswilligen unter Nutzung einer Geheim-Passwort-Information des Zahlungswilligen durch das Kommunikationssystem ermittelt werden. Durch Verwendung der Geheim-Passwort-Information, die nur dem Zahlungswilligen bekannt ist, kann die Identität des Zahlungswilligen schnell und zuverlässig ermittelt werden. Darüber hinaus kann die Geheim-Passwort-Information einfach durch eine neue Geheim-Passwort-Information ersetzt werden, wenn der Verdacht besteht, dass Unbefugte Kenntnis der Geheim-Passwort-Information erlangt haben.

Weiterhin kann die Identität des Zahlungswilligen durch Auslesen von Daten aus einer Chipkarte oder einer Magnetkarte im Kommunikationsgerät des Zahlungswilligen ermittelt werden. Diese Art der Identitätsermittlung lässt sich vorteilhafterweise bei Mobiltelefonen unter Nutzung der SIM-Karte (Subsciber Identity Module-Karte) des Zahlungswilligen anwenden.

Weiterhin kann die Ermittlung der Identität des Zahlungswilligen durch Auswertung einer seinem Kommunikationssystemanschluss zugeordneten Kennung ermittelt werden. Bei dieser Kennung kann es sich beispielsweise um die Rufnummer eines Festnetztelefonanschlusses handeln.

Die drei soeben genannten Möglichkeiten zur Ermittlung der Identität des Zahlungswilligen als solche sind bereits in Kommunikationssystemen implementiert. Die Geheim-Passwort-Abfrage ist beispielsweise bei Nutzung des Internets als Kommunikationssystem üblich, wenn sich der Zahlungswillige bei seinem Internet-Provider zur Durchführung einer Internetsitzung anmeldet. Die Identitätsermittlung über Chip-oder Magnetkarte ist z. B. im Mobilfunksystem GSM (Global System for Mobile Communication) üblich. Die Identitätsermittlung über die Auswertung einer dem Kommunikationssystemanschluss zugeordneten Kennung als dritte Möglichkeit wird im leitungsgebundenen Telekommunikationsnetz genutzt. Diese Möglichkeiten der Identitätsermittlung sind in den bekannten Kommunikationssystemen standardmäßig implementiert und werden bei der Durchführung von Kommunikationsvorgängen benutzt, so dass bei dem erfindungsgemäßen Verfahren zur Übertragung von Zahlungsinformationen für die Ermittlung der Identität des Zahlungswilligen kein Mehraufwand notwendig ist.

In einer besonderen Ausführungsform des erfindungsgemäßen Verfahrens können als Zahlungsinformationen kartenindividuelle Informationen einer Kreditkarte zu der Kommunikationseinrichtung des Informationsempfängers übertragen werden. Kreditkartenindividuelle Informationen, wie z. B. Kartentyp, Kartennummer oder Ablaufdatum, müssen oftmals zu Informationsempfängern übertragen werden, wobei der Zahlungswillige ein bequemes und sicheres Übertragungsverfahren wünscht.

In einer weiteren Ausgestaltungsform des erfindungsgemäßen Verfahrens können als Zahlungsinformationen kontenindividuelle Informationen eines Geldkontos übertragen werden. Auch für geldkontoindividuelle Informationen, wie z. B. Kontonummer und Bankleitzahl, besteht der Wunsch nach bequemen und sicheren Übertragungsverfahren, so dass das erfindungsgemäße Verfahren hierfür bevorzugt angewandt werden kann.

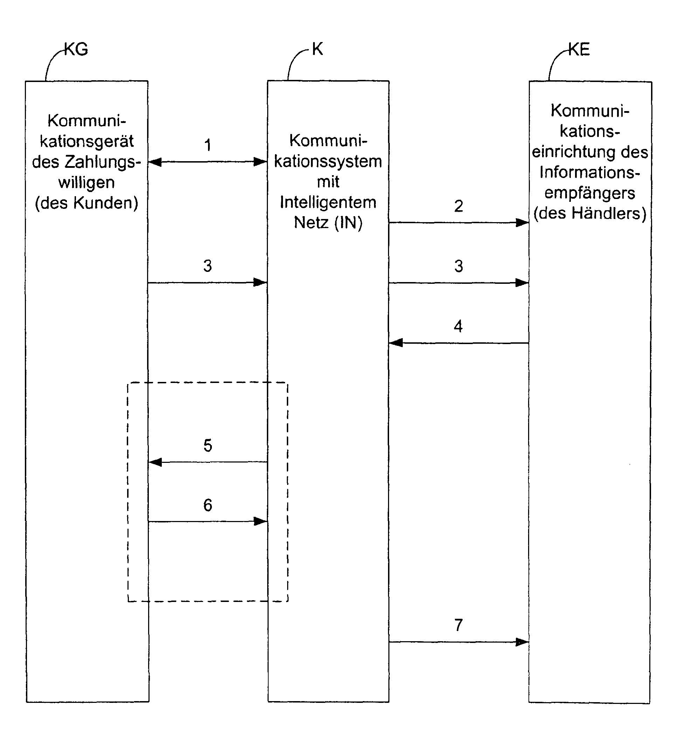

Zur weiteren Erläuterung des erfindungsgemäßen Verfahrens ist in der Figur ein schematischer Verfahrensablauf dargestellt.

In der Figur ist auf der linken Seite ein Kommunikationsgerät KG eines Zahlungswilligen, z. B. ein Mobiltelefon eines Kunden eines Versandhändlers, in der Mitte ein Kommunikationssystem K mit einer IN-Struktur (IN = Intelligentes Netz) und auf der rechten Seite eine Kommunikationseinrichtung KE eines Informationsempfängers, z. B. ein Telefon des Versandhändlers, dargestellt. Ein Intelligentes Netz ist z.B. in dem Buch "Technik der Netze" von Gerd Siegmund, 4. neubearbeitete und erweiterte Auflage, 1999, erschienen im Hüthig Verlag Heidelberg in Kap. 6.4 beschrieben.

Zu Beginn des Verfahrens wird vom Kommunikationsgerät KG des Zahlungswilligen Kontakt mit dem Kommunikationssystem K aufgenommen(Pfeil 1). Das Kommunikationssystem K ermittelt daraufhin die Identität des Zahlungswilligen (z. B. über eine SIM-Chipkarte des Zahlungswilligen, die dieser in seinem Kommunikationsgerät KG benutzt). Daraufhin sendet das Kommunikationssystem K eine Nachricht 2 an die Kommunikationseinrichtung KE des Informationsempfängers. Diese Nachricht 2 enthält einen Datensatz, der den Zahlungswilligen kennzeichnet. Dieser Datensatz kann beispielsweise eine dem Zahlungswilligen temporär zugeordnete Nummer (eine sog. Correlation Id) enthalten. Als den Zahlungswilligen kennzeichnende Daten können ebenfalls die IP-Adresse des zahlungswilligen Kunden (bei Benutzung des Internets) bzw. bei Benutzung des Telefonnetzes die Rufnummer des Kunden übertragen werden. Darüber hinaus können im Rahmen der Nachricht 2 das Kommunikationssystem kennzeichnende Informationen, wie z. B. eine Internet IP-Adresse oder eine CCS7-Adresse (Common Channel Signaling System No. 7, auf deutsch: zentraler Zeichengabekanal Nr. 7) übertragen werden.

Nun wird vom Kommunikationssystem eine Kommunikationsverbindung 3 zwischen dem Kommunikationsgerät KG des Zahlungswilligen und der Kommunikationseinrichtung KE des Informationsempfängers hergestellt. Über diese Kommunikationsverbindung 3 kann seitens des zahlungswilligen Kunden beispielsweise ein Produkt bei dem Informationsempfänger (Händler) bestellt oder eine kostenpflichtige Information abgerufen werden, welche der Informationsempfänger bereitgestellt hat. Nun möchte der Informationsempfänger eine Zahlungsrechnung über die bestellten Produkte oder die abgerufenen Informationen erstellen. Dazu benötigt er die Zahlungsinformationen des Zahlungswilligen, welche in einem Datenspeicher des Kommunikationssystems K gespeichert sind. Die Kommunikationseinrichtung KE des Informationsempfängers sendet daraufhin eine Anfragenachricht 4 an das Kommunikationssystem K. Mit dieser Anfragenachricht 4 werden die den Zahlungswilligen beschreibenden Daten (z. B. die Correlation Id) mitgesendet. Dem Kommunikationssystem K ist nun bekannt, für welchen Zahlungswilligen der Informationsempfänger die zugeordneten Zahlungsinformationen benötigt. Das Kommunikationssystem K kann folglich diese Zahlungsinformationen aus seinem Datenspeicher auslesen. Als optionaler Schritt, der in der Figur durch eine gestrichelte Einrahmung markiert ist, kann danach eine weitere Anfragenachricht 5 vom Kommunikationssystem K an das Kommunikationsgerät KG des Zahlungswilligen gesendet werden, mit der der Zahlungswillige über die bevorstehende Übermittlung der Zahlungsinformationen an die Kommunikationseinrichtung KE des Informationsempfängers unterrichtet wird und mit der das Einverständnis des Zahlungswilligen abgefragt wird. Mit einer Antwortnachricht 6 sendet der Zahlungswillige sein Einverständnis bzw. sein Nichteinverständnis an das Kommunikationssystem K zurück. Im Falle des Einverständnisses des Zahlungswilligen werden die Zahlungsinformationen mit einer Übertragungsnachricht 7 an den Informationsempfänger übertragen. Im Falle des Nichteinverständnisses sendet das Kommunikationssystem K mit der Übertragungsnachricht 7 eine entsprechende Mitteilung an den Informationsempfänger; diese Übertragungsnachricht 7 enthält in diesem Fall jedoch nicht die Zahlungsinformationen.

Wenn mit dem obigen beschriebenen Verfahren z. B. die Kreditkartendaten des Zahlungswilligen an die Kommunikationseinrichtung KE des Informationsempfängers übermittelt werden, ergibt sich für den Zahlungswilligen der Vorteil, dass er seine Kreditkartendaten nicht über das Kommunikationssystem zu übermitteln braucht. Er braucht diese Daten im Moment der Kommunikationssystembenutzung nicht einmal zur Hand zu haben, da diese im Datenspeicher des Kommunikationssystems abgespeichert sind. Damit ist für den Zahlungswilligen ein bequemes Verfahren zur Kreditkartendaten-Übertragung bereitgestellt. Außerdem muss keinerlei zusätzlicher Aufwand für die Sicherung der Datenübertragung von dem Kommunikationsgerät KG des Zahlungswilligen zum Kommunikationssystem K vorgenommen werden, da auf diesem Datenweg keine vertraulichen Karteninformationen übertragen werden. Da der Zahlungswillige sowieso bei jeder Benutzung seines Kommunikationssystems identifiziert wird, muss für die Identitätsfeststellung im erfindungsgemäßen Verfahren kein zusätzlicher Aufwand betrieben werden.

Der Informationsempfänger (Händler) hat den Vorteil, dass - weil zwischen dem Zahlungswilligen und einem Betreiber des Kommunikationssystems im allgemeinen bereits ein Vertragsverhältnis über die Benutzung des Kommunikationssystems besteht - der Zahlungswillige vom Betreiber des Kommunikationssystems bereits in gewisser Weise auf Bonität geprüft ist, so dass sich für den Informationsempfänger (Händler) eine höhere Sicherheit beim Geschäftsverkehr mit dem Zahlungswilligen ergibt. Darüber hinaus kann der Zahlungswillige keine Kreditkartendaten von gestohlenen Kreditkarten an den Informationsempfänger übertragen.

Vorteil für den Betreiber des Kommunikationssystems: Der Betreiber des Kommunikationssystems bindet sowohl den Zahlungswilligen als auch den Informationsempfänger an die Benutzung seines Kommunikationssystems. Dadurch kann er Gebühreneinnahmen erzielen. Darüber hinaus kann er z. B. für die Bereitstellung und Übertragung der Zahlungsinformationen an die Kommunikationseinrichtung KE des Informationsempfängers zusätzliche Gebühren oder eine Beteiligungssumme an dem Umsatz des Informationsempfängers (Händlers) in Rechnung stellen.

## Patentansprüche

1. Verfahren zum Übertragen von für die Bezahlung von Produkten und Leistungen vorgesehenen Zahlungsinformationen eines sein Kommunikationsgerät (KG) bedienenden Zahlungswilligen an eine mit dem Kommunikationsgerät (KG) verbundene Kommunikationseinrichtung (KE) eines Informationsempfängers nach Feststellung der Identität des Zahlungswilligen durch das das Kommunikationsgerät (KG) enthaltende Kommunikationssystem (K),
**dadurch gekennzeichnet**, dass
- dem Zahlungswilligen nach Feststellung seiner Identität kommunikationssystemseitig (K) ein ihn kennzeichnender Datensatz zugeordnet wird,
- danach dieser Datensatz von dem Kommunikationssystem (K) an die Kommunikationseinrichtung (KE) des Informationsempfängers übertragen wird,
- zwischen dem Kommunikationsgerät (KG) des Zahlungswilligen und der Kommunikationseinrichtung (KE) des Informationsempfängers eine Kommunikationsverbindung (3) aufgebaut wird,
- von der Kommunikationseinrichtung (KE) des Informationsempfängers der den Zahlungswilligen kennzeichnende Datensatz an das Kommunikationssystem (K) zurückgesandt wird und
- aus in einem an das Kommunikationssystem (K) angeschlossenen Datenspeicher gespeicherten Zahlungsdaten unter Nutzung des zurückgesandten Datensatzes die dem Zahlungswilligen zugeordneten Zahlungsinformationen kommunikationssystemseitig ausgewählt und an die Kommunikationseinrichtung (KE) des Informationsempfängers übermittelt werden.

2. Verfahren nach Anspruch 1,
**dadurch gekennzeichnet**, dass
- von der Kommunikationseinrichtung (KE) des Informationsempfängers der den Zahlungswilligen kennzeichnende Datensatz an das Kommunikationssystem (K) ausschließlich dann zurückgesandt wird, wenn während der Kommunikationsverbindung (3) kostenpflichtige Informationen durch das Kommunikationsgerät (KG) abgerufen werden oder wenn von Seiten des Kommunikationsgerätes (KG) kostenpflichtige Produkte oder Leistungen bestellt werden.

3. Verfahren nach Anspruch 1 oder 2,
**dadurch gekennzeichnet**, dass
- dem Zahlungswilligen kommunikationssystemseitig (K) ein ihn kennzeichnender Datensatz zugeordnet wird, welcher eine dem Zahlungswilligen temporär zugeordnete Nummer enthält.

4. Verfahren nach einem der vorhergehenden Ansprüche,
**dadurch gekennzeichnet**, dass
- dem Zahlungswilligen kommunikationssystemseitig (K) ein ihn kennzeichnender Datensatz zugeordnet wird, welcher eine Telefonnummer eines als Kommunikationsgerät (KG) des Zahlungswilligen dienenden Telefons enthält.

5. Verfahren nach einem der vorhergehenden Ansprüche,
**dadurch gekennzeichnet**, dass
- dem Zahlungswilligen kommunikationssystemseitig (K) ein ihn kennzeichnender Datensatz zugeordnet wird, welcher eine IP-Adresse eines als Kommunikationsgerät (KG) des Zahlungswilligen dienenden Rechners enthält.

6. Verfahren nach einem der vorhergehenden Ansprüche,
**dadurch gekennzeichnet**, dass
- dem Zahlungswilligen kommunikationssystemseitig (K) ein ihn kennzeichnender Datensatz zugeordnet wird, welcher eine CCS7-Adresse eines bei der Datenübertragung benutzten Zentraler-Zeichengabekanal-Nr.7-Systems enthält.

7. Verfahren nach einem der vorhergehenden Ansprüche,
**dadurch gekennzeichnet**, dass
- die Auswahl und die Übermittlung der Zahlungsinformationen von einem intelligenten Knoten eines mit dem Kommunikationssystem (K) verbundenen oder in dem Kommunikationssystem (K) enthaltenen Intelligenten Netzes (IN) gesteuert wird.

8. Verfahren nach einem der vorhergehenden Ansprüche,
**dadurch gekennzeichnet**, dass
- vor der Übermittlung der Zahlungsinformationen an den Informationsempfänger kommunikationssystemseitig an das Kommunikationsgerät (KG) des Zahlungswilligen ein Abfragesignal gesendet wird.

9. Verfahren nach einem der Ansprüche 1 bis 8,
**dadurch gekennzeichnet**, dass
- als Kommunikationssystem (K) ein leitungsgebundenes Telefonnetz verwendet wird.

10. Verfahren nach einem der Ansprüche 1 bis 8,
**dadurch gekennzeichnet**, dass
- als Kommunikationssystem (K) ein Mobiltelefonnetz verwendet wird.

11. Verfahren nach einem der Ansprüche 1 bis 8,
**dadurch gekennzeichnet**, dass
- als Kommunikationssystem (K) ein Rechnernetz verwendet wird.

12. Verfahren nach einem der Ansprüche 1 bis 11,
**dadurch gekennzeichnet**, dass
- die Identität des Zahlungswilligen unter Nutzung einer Geheim-Passwort-Information des Zahlungswilligen durch das Kommunikationssystem (K) ermittelt wird.

13. Verfahren nach einem der Ansprüche 1 bis 11,
**dadurch gekennzeichnet**, dass
- die Identität des Zahlungswilligen durch Auslesen von Daten aus einer Chipkarte oder einer Magnetkarte im Kommunikationsgerät (KG) des Zahlungswilligen ermittelt wird.

14. Verfahren nach einem der Ansprüche 1 bis 11,
**dadurch gekennzeichnet**, dass
- die Identität des Zahlungswilligen durch Auswertung einer seinem Kommunikationssystemanschluß zugeordneten Kennung ermittelt wird.

15. Verfahren nach einem der Ansprüche 1 bis 14,
**dadurch gekennzeichnet**, dass
- als Zahlungsinformationen kartenindividuelle Informationen einer Kreditkarte übertragen werden.

16. Verfahren nach einem der Ansprüche 1 bis 14,
**dadurch gekennzeichnet**, dass
- als Zahlungsinformationen kontenindividuelle Informationen eines Geldkontos übertragen werden.
